# FASCICULE DE BREVET EUROPEEN

(11) **EP 0 834 676 B1**
(45) Date de publication et mention de la délivrance du brevet: **30.05.2001**
(21) Numéro de dépôt: 97402093.5
(22) Date de dépôt: 09.09.1997
(51) Int. Cl.: F16G 13/06

(54) **Chaîne de transmission notamment pour cycle**
Treibkette, insbesondere für Fahrrad
Drivig chain, especially for bicycle

(30) Priorité: 19.09.1996 FR 9611437
(43) Date de publication de la demande: 08.04.1998
(73) Titulaire: SRAM CORPORATION, Chicago, Illinois 60610 (US)
(72) Inventeur: Guichard, Daniel, 38260 La Cote St. Andre (Isère) (FR)
(74) Mandataire: Cabinet HERRBURGER

(56) Documents cités:
- DE-C- 93 624
- DE-U- 9 101 113
- DE-U- 9 309 645
- GB-A- 2 117 084
- GB-A- 2 257 221
- GB-A- 2 260 592

## Description

La présente invention concerne une chaîne de transmission, notamment pour cycle, selon le préambule de la revendication 1.

De telles chaînes sont connues.

Ainsi, selon le document DE-U-93 09 645.3 on connaît une chaîne dont les plaques des maillons extérieurs comportent chacune un crevé rentrant, de forme circulaire, pour mieux guider la chaîne sur les dents des pignons, les dents venant dans l'intervalles entre les bords des deux crevés.

A côté de la difficulté d'utilisation d'une telle chaîne, relativement bruyante à cause du contact entre les dents et les bords des crevés, cette chaîne est aussi lourde qu'une chaîne traditionnelle et de plus, les crevés qui forment un canal et des parties en relief, constituent des nids à salissures rendant son fonctionnement relativement difficile et compliquant son nettoyage.

La présente invention a pour but de remédier à ces inconvénients et se propose de créer une chaîne légère, résistante, simple à fabriquer et évitant l'accrochage des salissures ou facilitant leur évacuation ainsi que la circulation du lubrifiant ou du liquide de nettoyage.

A cet effet, l'invention concerne une chaîne du type défini par les caractéristiques de la revendication 1.

Grâce aux orifices dans les maillons extérieurs et intérieurs et aux axes creux, la chaîne selon l'invention est beaucoup plus légère qu'une chaîne classique de même résistance. Ce gain de poids participe à la recherche générale du gain de poids sur un cycle. De plus, cette chaîne offre très peu de surface d'accrochage pour des salissures du fait de l'interruption créée dans la partie de liaison par les orifices. Cette interruption de la surface des parties de liaison des plaques des maillons vaut à la fois dans la direction verticale et dans la direction horizontale.

Ces orifices facilitent également la circulation du lubrifiant ainsi que celle du liquide de nettoyage.

Suivant une autre caractéristique de l'invention, l'orifice des plaques est allongé et ses extrémités sont arrondies. Cet orifice correspond à la partie mécaniquement inactive de la structure de chaque plaque.

Les extrémités de l'axe creux comportent des encoches, ce qui permet d'ouvrir légèrement l'extrémité pour sertir l'axe sur les deux plaques du maillon extérieur.

La présente invention sera décrite de manière plus détaillée à l'aide des dessins annexés dans lesquels :
- la figure 1 est une vue en plan d'une chaîne selon l'invention,
- la figure 2 est une vue de côté de la chaîne représentée à la figure 1,
- la figure 3 est une vue en coupe suivant la ligne III-III de la figure 1 à l'échelle agrandie,
- la figure 4 est une vue en coupe suivant la ligne IV-IV de la figure 1 à l'échelle agrandie,
- la figure 5 est une vue en coupe suivant la ligne V-V de la figure 1 à l'échelle agrandie,
- la figure 6 est une vue suivant la flèche VI de la figure 1 d'une plaque extérieure selon l'invention,
- la figure 7 est une vue suivant la flèche VII de la figure 1 d'une plaque intérieure selon l'invention.

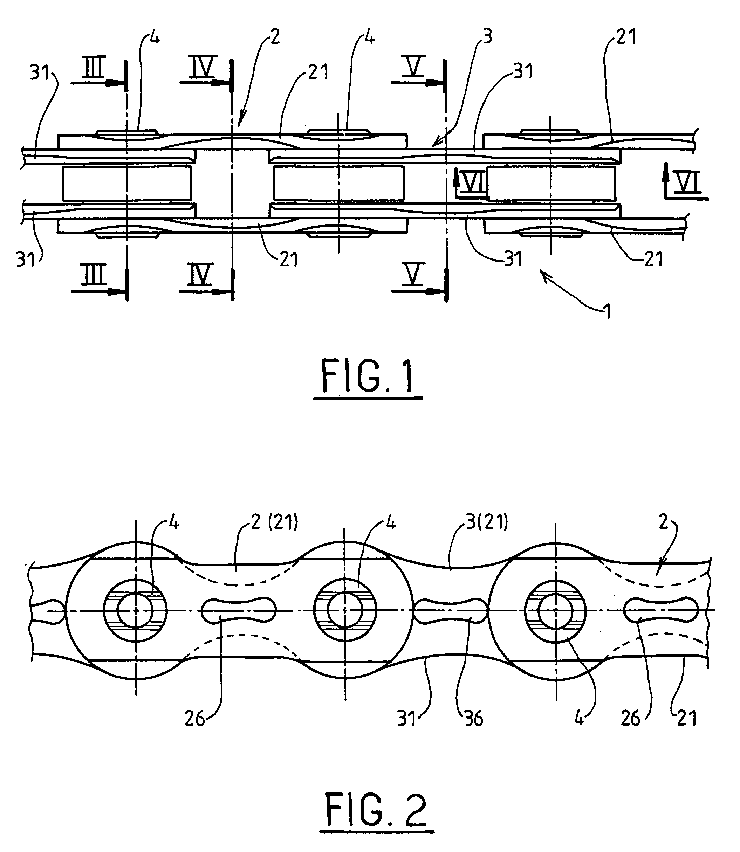

Selon les figures 1 et 2, l'invention concerne une chaîne de transmission notamment pour cycle. Cette chaîne portant globalement la référence 1 est formée de maillons extérieurs 2 et de maillons intérieurs 3. Ces maillons alternent et sont assemblés à leurs extrémités par des axes 4.

Les maillons extérieurs 2 sont formés de deux plaques extérieures 21 et les maillons intérieurs 3, de deux plaques intérieures 31.

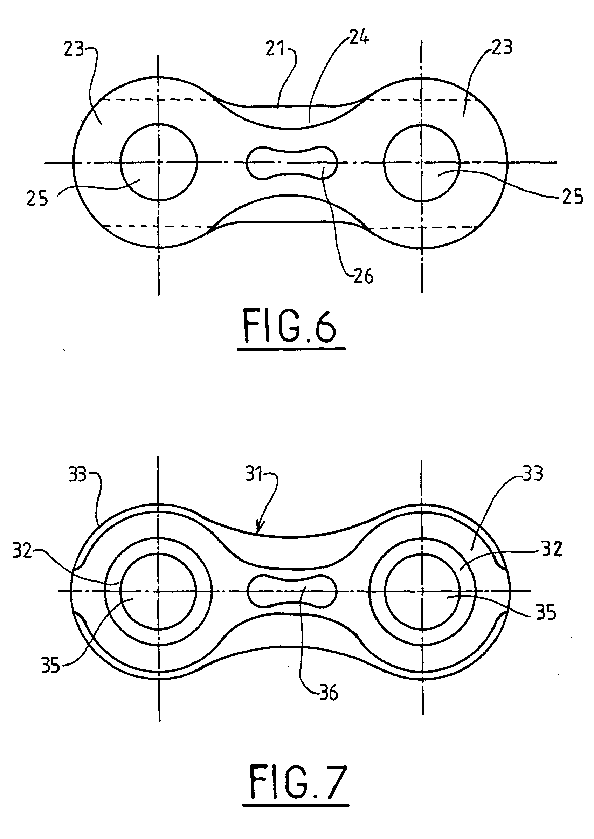

Les plaques extérieures 21 sont représentées à la figure 6 et les plaques intérieures 31 à la figure 7.

Les plaques extérieures 21 comportent deux extrémités renflées 23 reliées par une partie de liaison 24. Les extrémités renflées 24 sont munies chacune d'un trou 25 pour le passage de l'axe 4. La partie de liaison 24 est munie d'un orifice 26 selon l'invention.

Il en est de même de la structure des plaques intérieures 31 selon la figure 7. Ces plaques 31 comportent des extrémités 33, renflées, munies d'un canon 32 bordant le trou 35 du passage de l'axe. Ces plaques intérieures 31 sont également munies d'un orifice 36.

Les orifices 26, 36 sont allongés, leurs extrémités sont arrondies et de largeur plus grande que la partie intermédiaire, en épousant sensiblement la forme des maillons.

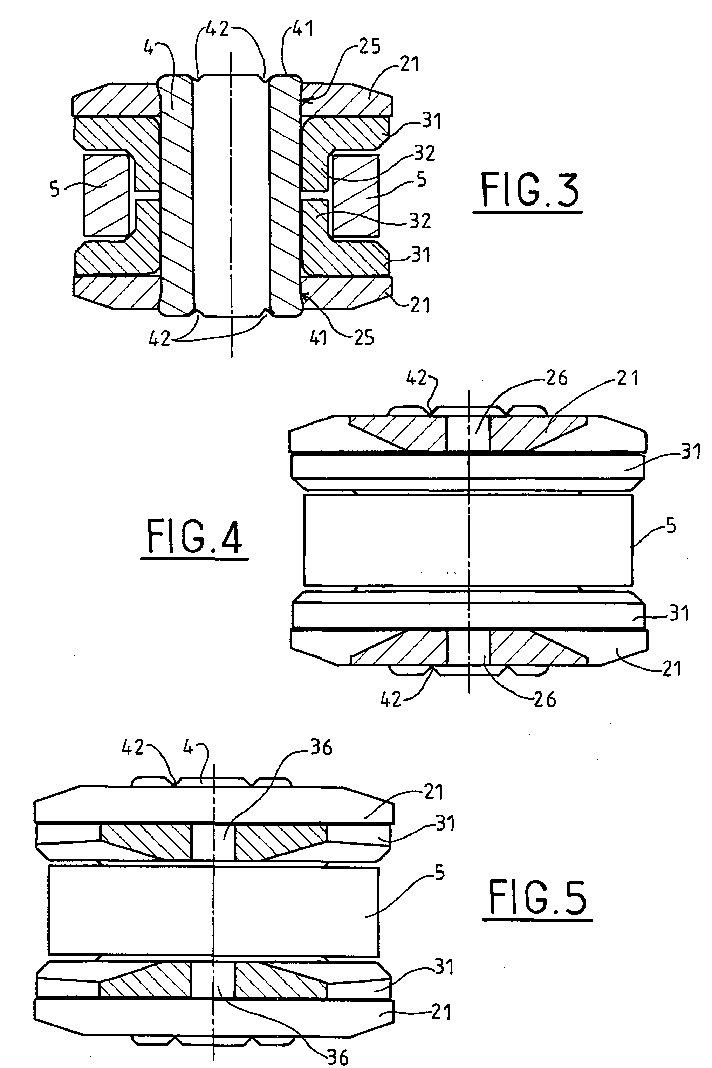

L'assemblage des maillons intérieures et extérieurs et de l'axe apparaît plus clairement à la figure 3. Cette figure montre les maillons extérieurs 31 auxquels est relié par sertissage l'axe 4. Cet axe porte les maillons intérieurs 31 par leur canon 32. Enfin, les canons 32 portent les rouleaux 5.

La figure 3 montre, comme d'ailleurs les figures 4 et 5, la forme des extrémités 41 de l'axe qui comporte des encoches 42 facilitant le sertissage de l'axe dans les trous 25 des maillons extérieurs 21.

Les figures 4 et 5 laissent apparaître de façon plus particulière la section des maillons extérieurs (figure 4) et intérieurs (figure 5) au droit des orifices 26, 36.

Ces sections montrent également la forme particulière, connue, des plaquettes avec des parties amincies pour faciliter le contact avec les dents des pignons.

L'invention n'est pas limitée au mode de réalisation décrit et représenté.

L'invention s'applique aussi bien à des chaînes de transmission pour cycles qu'à des chaînes de transmission pour véhicules automobiles, motocyclettes ou de machines industrielles.

## Revendications

1. Chaîne de transmission notamment pour cycle,
- formée d'une alternance de maillons extérieurs (2) et de maillons intérieurs (3) reliés par des axes (4),
- les maillons extérieurs (2) et les maillons intérieurs (3) étant composés de plaques extérieures (21) et de plaques intérieures (31), munies de parties amincies permettant de faciliter le contact avec les dents des pignons,
- chaque plaque extérieure (21) et intérieure (31) ayant deux extrémités renflées (23, 33) munies chacune d'un trou (25, 35) pour recevoir l'axe (4) et reliées par une partie de liaison (24, 34),
- les plaques des maillons intérieurs (3) ayant des canons (32) recevant les rouleaux (5),
caractérisée en ce que
- les parties de liaison (24, 34) des plaques (21, 31) comportent des orifices (26, 36) allongés à extrémités arrondie,
- les axes (4) sont creux et leurs extrémités (41) sont munies d'encoches de sertissage (42).

2. Chaîne de transmission, notamment pour cycle, selon la revendication 1,
caractérisée en ce que
les encoches de sertissage (42) sont longitudinales dans la direction de la chaîne.

## Patentansprüche

1. Triebkette, insbesondere für ein Fahrrad,
- die gebildet ist aus einer Wechselfolge von äußeren Kettengliedern (2) und inneren Kettengliedern (3), die durch Achsen (4) verbunden sind,
- wobei die äußeren Kettenglieder (2) und die inneren Kettenglieder (3) aus äußeren Platten (21) und inneren Platten (31) zusammengesetzt sind, die mit sich verjüngenden Bereichen versehen sind, um den Kontakt mit Kettenzahnkranzzähnen zu erleichtern,
- wobei jede äußere Platte (21) und innere Platte (31) zwei bauchige Enden (23, 33) hat, die jeweils mit einer Öffnung (25, 35) zur Aufnahme der Achse (4) versehen sind und durch einen Verbindungsbereich (24, 34) verbunden sind,
- wobei die Platten der inneren Kettenglieder (3) Rollen (5) aufnehmende Rollenhülsen (32) haben,
**dadurch gekennzeichnet**,
- daß die Verbindungsbereiche (24, 34) der Platten (21, 31) längliche Öffnungen (26, 36) mit gerundeten Enden aufweisen und
- daß die Achsen (4) hohl sind und an ihren Enden (41) mit Kerbverbindungskerben (42) versehen sind.

2. Triebkette nach Anspruch 1, insbesondere für Fahrräder,
**dadurch gekennzeichnet**,
daß die Kerbverbindungskerben (42) längs in Richtung der Kette ausgebildet sind.

## Claims

1. A transmission chain, in particular for a cycle,
- made up of alternating outer links (2) and inner links (3) joined by pins (4),
- the outer links (2) and the inner links (3) being made up of outer plates (21) and inner plates (31) having thinner regions to enable easy contact with the teeth of pinions,
- each outer (21) and inner (31) plate having two flared ends (23, 33), each of which is provided with an orifice (25, 35) to receive the pin (4) and joined by a linking part (24, 34),
- the plates of the inner links (3) having barrels (32) receiving rolls (5),
characterised in that
the linking parts (24, 34) of the plates (21, 31) have elongate orifices (26, 36) with rounded ends,
- the pins (4) are hollow and their ends (41) are provided with crimped notches (42).

2. Transmission chain, in particular for a cycle, as claimed in claim 1, characterised in that
the crimped notches (42) are longitudinal in the direction of the chain.
